(19)

Europäisches
Patentamt
European
Patent Office
Office européen
des brevets

(11) **EP 3 940 828 A1**

(12) **EUROPEAN PATENT APPLICATION**
published in accordance with Art. 153(4) EPC

(43) Date of publication:
**19.01.2022 Bulletin 2022/03**

(21) Application number: **20770020.4**

(22) Date of filing: **06.03.2020**

(51) International Patent Classification (IPC):
**H01M 4/88** (2006.01)     **H01M 4/96** (2006.01)
**H01M 8/02** (2016.01)     **H01M 8/18** (2006.01)

(52) Cooperative Patent Classification (CPC):
**H01M 4/88; H01M 4/96; H01M 8/02; H01M 8/18;**
Y02E 60/50; Y02P 70/50

(86) International application number:
**PCT/JP2020/009755**

(87) International publication number:
**WO 2020/184451 (17.09.2020 Gazette 2020/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.03.2019 JP 2019045664**

(71) Applicants:
  • **TOYOBO CO., LTD.**
    **Osaka-shi**
    **Osaka 530-8230 (JP)**
  • **SUMITOMO ELECTRIC INDUSTRIES, LTD.**
    **Osaka-shi, Osaka 541-0041 (JP)**

(72) Inventors:
  • **MORIMOTO, Kana**
    **Otsu-shi, Shiga 520-0292 (JP)**

  • **KOBAYASHI, Masaru**
    **Osaka-shi, Osaka 530-8230 (JP)**
  • **IWAHARA, Ryouhei**
    **Otsu-shi, Shiga 520-0292 (JP)**
  • **MATSUMURA, Takahiro**
    **Otsu-shi, Shiga 520-0292 (JP)**
  • **OYA, Masayuki**
    **Osaka-shi, Osaka 541-0041 (JP)**
  • **DONG, Yongrong**
    **Osaka-shi, Osaka 541-0041 (JP)**
  • **KAWAGOE, Yoshiyasu**
    **Osaka-shi, Osaka 541-0041 (JP)**
  • **HASHIMOTO, Koichi**
    **Osaka-shi, Osaka 541-0041 (JP)**

(74) Representative: **Vossius & Partner**
    **Patentanwälte Rechtsanwälte mbB**
    **Siebertstraße 3**
    **81675 München (DE)**

(54) **CARBON ELECTRODE MATERIAL FOR MANGANESE/TITANIUM-BASED REDOX FLOW BATTERY**

(57)    To provide a carbon electrode material that is capable of decreasing cell resistance during initial charging and discharging to improve battery energy efficiency. A carbon electrode material for a negative electrode of a manganese/titanium-based redox flow battery including carbon fibers (A), carbon particles (B) other than graphite particles, and a carbon material (C) for binding the carbon fibers (A) and the carbon particles (B) other than graphite particles and satisfying (1) a particle diameter of the carbon particles (B), (2) Lc(B), (3) Lc(C)/Lc(A), (4) A mesopore specific surface area, and (5) a number of oxygen atoms bound to the surface of the carbon electrode material.

EP 3 940 828 A1

**Description**

TECHNICAL FIELD

The present invention relates to a carbon electrode material for use in a negative electrode of a manganese/titanium-based redox flow battery, and more specifically to a carbon electrode material that allows the entirety of a redox flow battery to have excellent energy efficiency.

BACKGROUND ART

A redox flow battery is a battery that utilizes oxidation-reduction in an aqueous solution of redox flow ions, and is a high-capacity storage battery having very high safety because of its mild reaction in only a liquid phase.

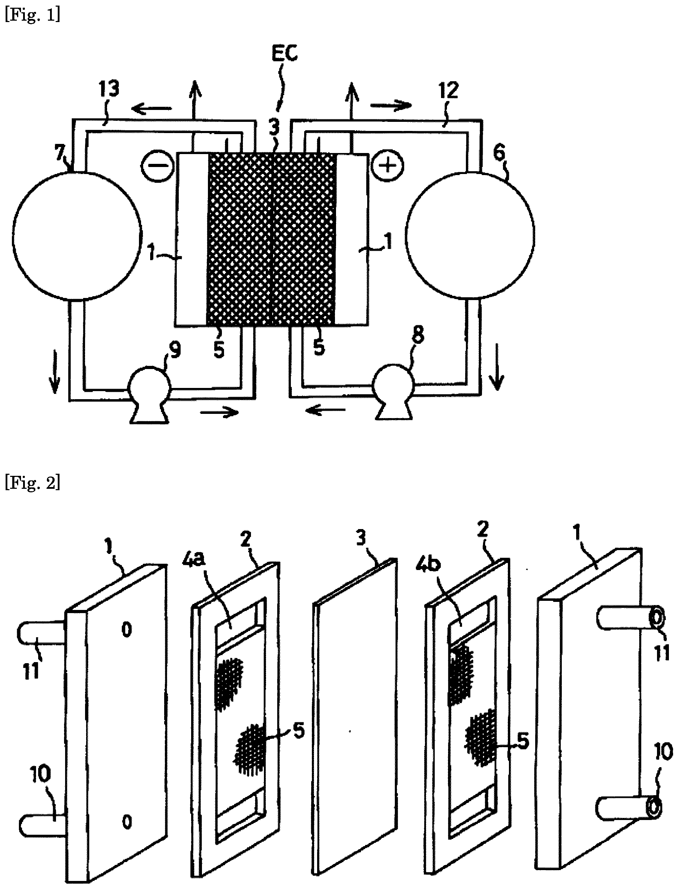

As shown in FIG. 1, a redox flow battery mainly includes outer tanks 6 and 7 for storing electrolytes (positive electrode electrolyte, negative electrode electrolyte), and an electrolytic cell EC. In the electrolytic cell EC, an ion-exchange membrane 3 is disposed between current collecting plates 1, 1 opposing each other. In the redox flow battery, while electrolytes containing active materials are being fed from the outer tanks 6 and 7 to the electrolytic cell EC by pumps 8 and 9, electrochemical energy conversion, that is, charging and discharging, is performed on electrodes 5 incorporated in the electrolytic cell EC. A carbon material that has chemical resistance, electrical conductivity, and liquid permeability is used for the material of the electrode 5.

As an electrolyte used for a redox flow battery, an aqueous solution that contains metal ions whose valence is changed by oxidation-reduction is typically used. The type of electrolyte has been changed from a type in which a hydrochloric acid aqueous solution of iron is used for a positive electrode and a hydrochloric acid aqueous solution of chromium is used for a negative electrode, to a type in which a sulfuric acid aqueous solution of vanadium having high electromotive force is used for both electrodes, thereby increasing the energy density.

In the case of a redox flow battery in which an acidic sulfuric acid aqueous solution of vanadium oxysulfate is used for a positive electrode electrolyte, and an acidic sulfuric acid aqueous solution of vanadium sulfate is used for a negative electrode electrolyte, an electrolyte containing $V^{2+}$ is supplied to a liquid flow path on the negative electrode side, and an electrolyte containing $V^{5+}$ (ion containing oxygen in practice) is supplied to a liquid flow path on the positive electrode side, during discharging. In the liquid flow path on the negative electrode side, $V^{2+}$ emits an electron in a three-dimensional electrode to be oxidized to $V^{3+}$. The emitted electron passes through an external circuit and reduces $V^{5+}$ to $V^{4+}$ (ion containing oxygen in practice) in a three-dimensional electrode on the positive electrode side. According to the oxidation-reduction reaction, $SO_4^{2-}$ becomes insufficient in the negative electrode electrolyte, and $SO_4^{2-}$ becomes excessive in the positive electrode electrolyte, so that $SO_4^{2-}$ transfers from the positive electrode side to the negative electrode side through the ion-exchange membrane to maintain charge balance. Alternatively, also by transfer of $H^+$ from the negative electrode side to the positive electrode side through the ion-exchange membrane, the charge balance can be maintained. During charging, a reaction reverse to that during discharging progresses.

An electrode material for a redox flow battery is particularly required to have the following performances.

1) Side reactions other than the target reaction do not occur (reaction selectivity is high), specifically, current efficiency ($\eta_I$) is high.
2) Electrode reaction activity is high, specifically, cell resistance (R) is low. That is, voltage efficiency ($\eta_V$) is high.
3) Battery energy efficiency ($\eta_E$) related to the above-described 1) and 2) is high.

$$\eta_E = \eta_I \times \eta_V$$

4) Degradation is small for repeated use (long lifespan), specifically, the amount of reduction in the battery energy efficiency ($\eta_E$) is small.

The development of electrolytes for use in redox flow batteries has been progressing intensively. For example, an electrolyte (for example, manganese - titanium -based electrolyte) in which manganese is used for a positive electrode, and chromium, vanadium, and/or titanium is used for a negative electrode, as in Patent Literature 1, is proposed as an electrolyte that has a higher electromotive force than the above-described vanadium-based electrolyte and that is stably available at low cost.

CITATION LIST

PATENT LITERATURE

[PTL 1] Japanese Laid-Open Patent Publication No. 2012-204135

SUMMARY OF THE INVENTION

PROBLEMS TO BE SOLVED BY THE INVENTION

In order to promote the spread of redox flow batteries (hereinafter, referred to as manganese/titanium-based redox flow batteries) in which a manganese/titanium-based electrolyte is used, an inexpensive electrode material having lower resistance is required.
The present invention has been made in view of the above circumstances, and an object of the present invention is to provide a carbon electrode material that is capable of decreasing cell resistance during initial charging and discharging to improve battery energy efficiency and that is used for a negative electrode of a manganese/titanium-based redox flow battery.

SOLUTION TO THE PROBLEMS

The present inventors have conducted studies in order to solve the above problems. As a result, the present inventors have found that, when manufacture is performed under predetermined conditions using carbon particles (B) (excluding graphite) having a small particle diameter and low crystallinity and a carbon material (C) having high crystallinity with respect to carbon fibers (A), the mesopore specific surface area of an electrode material is significantly increased, and an electrode material having very low resistance is obtained, and have completed the present invention.
The configuration of the present invention is as follows.

1. A carbon electrode material for a negative electrode of a manganese/titanium-based redox flow battery, the carbon electrode material comprising;

carbon fibers (A), carbon particles (B) other than graphite particles, and a carbon material (C) for binding the carbon fibers (A) and the carbon particles (B) other than graphite particles, and
the carbon electrode material for the manganese/titanium-based redox flow battery satisfies the following requirements:

(1) a particle diameter of the carbon particles (B) other than graphite particles is not larger than 1 $\mu$m;
(2) Lc(B) is not larger than 10 nm when Lc(B) represents a crystallite size, in a c-axis direction, obtained by X-ray diffraction in the carbon particles (B) other than graphite particles;
(3) Lc(C)/Lc(A) is 1.0 to 5 when Lc(A) and Lc(C) represent crystallite sizes, in a c-axis direction, obtained by X-ray diffraction in the carbon fibers (A) and the carbon material (C), respectively;
(4) A mesopore specific surface area obtained from a nitrogen adsorption amount is not less than 30 m$^2$/g; and
(5) A number of oxygen atoms bound to the surface of the carbon electrode material is not less than 1% of the total number of carbon atoms on the surface of the carbon electrode material.

2. The carbon electrode material according to the above 1, wherein mass ratio of the carbon material (C) to the carbon particles (B) other than graphite particles is not less than 0.2 and not larger than 10.
3. The carbon electrode material according to the above 1 or 2, wherein a BET specific surface area of the electrode material obtained from a nitrogen adsorption amount is not less than 40 m$^2$/g.
4. The carbon electrode material according to any one of the above 1 to 3, wherein a water flow rate of the electrode material is not less than 0.5 mm/sec.
5. A manganese/titanium-based redox flow battery comprising the carbon electrode material according to any one of the above 1 to 4 on a negative electrode.
6. A method for producing the carbon electrode material according to any one of the above 1 to 4, comprising following steps in this order;

a step of impregnating carbon fibers with carbon particles other than graphite particles and precursor of carbon material;

a carbonizing step of heating the product obtained by the impregnation at a heating temperature of 500°C or higher and lower than 2000°C under an inert atmosphere;

a primary oxidization step of oxidizing at temperature of not lower than 500°C and not higher than 900°C in a dry process;

a graphitization step of heating at a temperature of not lower than 1300°C and not higher than 2300°C under an inert atmosphere; and

a secondary oxidization step of oxidizing at temperature of not lower than 500°C and not higher than 900°C in a dry process.

## ADVANTAGEOUS EFFECTS OF THE INVENTION

According to the present invention, a carbon electrode material that decreases cell resistance during initial charging and discharging and has excellent battery energy efficiency and that is used for a negative electrode of a manganese/titanium-based redox flow battery, is obtained. The carbon electrode material of the present invention is preferably used for flow-type and non-flow type redox batteries or a redox battery composited with lithium, a capacitor, and a fuel-cell system.

## BRIEF DESCRIPTION OF THE DRAWINGS

[FIG. 1] FIG. 1 is a schematic diagram of a redox flow battery.
[FIG. 2] FIG. 2 is an exploded perspective view of a liquid-circulation type electrolytic cell that is preferably used in the present invention and has a three-dimensional electrode.
[FIG. 3] FIG. 3 is an SEM photograph (magnification: 100 times) of No. 5 (example of satisfying the present inventive requirements) in Table 3 in Example 1 described later.
[FIG. 4] FIG. 4 is an SEM photograph (magnification: 100 times) of No. 10 (example of unsatisfying the present inventive requirements) in Table 3 in Example 1 described later.

## DESCRIPTION OF EMBODIMENTS

To provide a carbon electrode material that decreases cell resistance during initial charging and discharging, the present inventors have studied using carbon particles other than graphite particles. As a result, it has been found that, when carbon particles having a small particle diameter and low crystallinity are used, the reaction surface area is increased, and oxygen functional groups are easily added, so that the reaction activity is increased and low resistance is achieved.

Specifically, in the present invention, as carbon particles other than graphite particles, the present inventors have decided to adopt carbon particles that satisfy the following requirements (1) and (2).

(1) The particle diameter of carbon particles (B) other than graphite particles is not larger than 1 $\mu$m.

(2) Lc(B) is not larger than 10 nm when Lc(B) represents a crystallite size, in a c-axis direction, obtained by X-ray diffraction in the carbon particles (B) other than graphite particles.

When carbon particles having a small particle diameter as in the above (1) are used, the reaction surface area is increased, so that it is possible to achieve low resistance. Furthermore, carbon particles having low crystallinity as in the above (2) allow easy introduction of oxygen functional groups to improve the reaction activity, so that it is possible to achieve lower resistance.

Furthermore, in the present invention, as a carbon material (C), the present inventors have decided to use a carbon material that has binding properties of binding both carbon fibers (A) and the carbon particles (B) other than graphite particles, that satisfies the following requirement (3), and that has high crystallinity with respect to the carbon fibers (A).

(3) Lc(C)/Lc(A) is 1.0 to 5 when Lc(A) and Lc(C) represent crystallite sizes, in a c-axis direction, obtained by X-ray diffraction in the carbon fibers (A) and the carbon material (C), respectively.

Here, "binding both carbon fibers (A) and carbon particles (B) other than graphite particles" (in other words, the carbon material used in the present invention acts as a binding agent for binding the carbon fibers and the carbon particles other than graphite particles) means that the carbon material firmly binds the surfaces and insides of the carbon fibers and the carbon particles other than graphite particles (including binding between the carbon fibers, and carbon particles other than graphite particles to each other) to each other, and the surfaces of the graphite particles are exposed while the carbon fibers are covered with the carbon material as a whole of the electrode material.

However, it is preferable that the carbon material that has bound the carbon fibers and the carbon particles is not in a coating state. Here, "not in a coating state" means that the carbon material (C) does not form a webbed form such as a totipalmate form or a palmate form between the carbon fibers (A). This is because, in the case where the coating state is formed, the liquid permeability for an electrolyte deteriorates and the reaction surface area of the graphite particles cannot be effectively utilized.

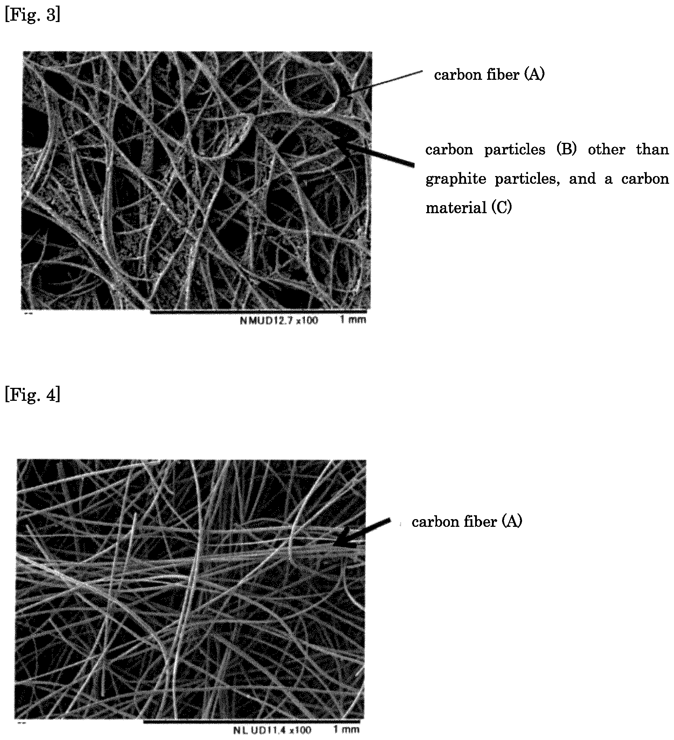

For reference, FIG. 3 shows an SEM photograph showing a state where both the carbon fibers (A) and the carbon particles (B) other than graphite particles are bound. FIG. 3 is an SEM photograph (magnification: 100 times) of No. 5 (example satisfying the requirements of the present invention) in Table 3 in Example 1 described later. From FIG. 3, it is found that the surfaces and insides of the carbon fibers (A) and the carbon particles (B) other than graphite particles are firmly bound by the carbon material (C), and the surfaces of the carbon particles (B) other than graphite particles are exposed while the carbon fibers (A) are covered with the carbon material (C).

Meanwhile, FIG. 4 is an SEM photograph showing a state where both the carbon fibers (A) and the carbon particles (B) other than graphite particles are not bound. FIG. 4 is an SEM photograph (magnification: 100 times) of No. 10 (example that does not satisfy the requirements of the present invention) in Table 3 in Example 1 described later.

Since the carbon material firmly binds the carbon fibers, etc., via the carbon particles other than graphite particles, an efficient conductive path between the carbon particles and the carbon fibers is formed. In order to form such a conductive path, it is necessary to increase the content ratio of the carbon material to the total content of the carbon fibers, the carbon particles other than graphite particles, and the carbon material. Therefore, the above content ratio is preferably set to be not less than 14.5%. On the other hand, in EXAMPLES in Patent Literature 1 described above, the content ratio of a carbon material is 14.4% at most and is less than that of the present invention. In this respect, Patent Literature 1 and the present invention are different from each other. This is because, originally, in Patent Literature 1, based on the idea that it is sufficient that only the part where carbon fibers and carbon particulates are originally in contact with each other is fixed (adhered), there is only recognition that it is sufficient that the carbon material to be used acts as a partial adhesive. Furthermore, Patent Literature 1 does not specifically specify the crystallinity of the carbon material for binding. In order to form an excellent conductive path, when a carbon material having high crystallinity with respect to the carbon fibers is used as in the present invention, the electron conductivity is increased, so that electrons can be more efficiently transferred.

Furthermore, the carbon electrode material of the present invention satisfies the following requirements (4) and (5).

(4) A mesopore specific surface area obtained from a nitrogen adsorption amount is not less than 30 $m^2$/g.
(5) The number of oxygen atoms bound to the surface of the carbon electrode material is not less than 1% of the total number of carbon atoms on the surface of the carbon electrode material.

As will be described in detail later, the mesopore specific surface area defined in the above (4) is obtained with a mesopore region having a diameter of 2 to 50 nm as a measurement target, and is widely used as an index that more effectively indicates the performance of an electrode material as compared with a BET specific surface area obtained with all pores as a measurement target. According to the present invention, a very large mesopore specific surface area of not less than 30 $m^2$/g is obtained, so that very low cell resistance can be achieved.

Moreover, due to the above (5), oxygen atoms can be introduced into edge surfaces or defective structural portions of carbon. As a result, reactive groups such as a carbonyl group, a quinone group, a lactone group, and a free-radical oxide are generated from the introduced oxygen atoms on the surface of the electrode material. Therefore, these reactive groups make a large contribution to electrode reaction, thereby achieving sufficiently low resistance.

Since the electrode material of the present invention is configured as described above, an inexpensive electrode having increased reaction activity and therefore low resistance is obtained.

The present invention will be described below in detail for each component with reference to FIG. 2.

FIG. 2 is an exploded perspective view of a liquid-circulation type electrolytic cell that is preferably used in the present invention. In the electrolytic cell shown in FIG. 2, an ion-exchange membrane 3 is disposed between two current collecting plates 1, 1 opposing each other, and liquid flow paths 4a and 4b for an electrolyte are formed by spacers 2 on both sides of the ion-exchange membrane 3 along the inner surfaces of the current collecting plates 1, 1. An electrode material 5 is disposed in at least one of the liquid flow paths 4a and 4b. A liquid inflow port 10 and a liquid outflow port 11 for an electrolyte are disposed at each current collecting plate 1. When a structure, in which an electrode is formed by the electrode material 5 and the current collecting plate 1 as shown in FIG. 2 and the electrolyte passes in the electrode material 5, is formed (electrode structure is three-dimensionally formed), the entire pore surface of the electrode material 5 can be used as an electrochemical reaction field to improve charging and discharging efficiency while transfer of electrons is ensured by the current collecting plate 1. As a result, the charging and discharging efficiency of the electrolytic cell is improved.

As described above, the electrode material 5 of the present invention is an electrode material in which the carbon fibers (A) act as a base material and the carbon particles (B) other than graphite particlesare carried by the high-crystalline carbon material (C), and the above-described requirements (1) to (5) are satisfied. The details of the requirements are as follows.

[Carbon Fibers (A)]

The carbon fibers used in the present invention mean fibers that are obtained by heating and carbonizing a precursor of organic fibers (details will be described later) and in which 90% or more in terms of mass ratio is composed of carbon (JIS L 0204-2). As the precursor of the organic fibers which is the raw material of the carbon fibers, acrylic fibers such as polyacrylonitrile; phenol fibers; PBO fibers such as polyparaphenylene benzobisoxazole (PBO); aromatic polyamide fibers; pitch fibers such as isotropic pitch fibers, anisotropic pitch fibers, and mesophase pitch; cellulose fibers; and the like can be used. Among them, as the precursor of the organic fibers, acrylic fibers, phenol fibers, cellulose fibers, isotropic pitch fibers, and anisotropic pitch fibers are preferable, and acrylic fibers are more preferable, from the viewpoint of having excellent strength and elasticity, etc. The acrylic fibers are not particularly limited as long as the fibers contain acrylonitrile as a main component, but the content of acrylonitrile in the raw material monomer forming the acrylic fibers is preferably not less than 95% by mass and more preferably not less than 98% by mass.

The mass average molecular weight of the organic fibers is, but is not particularly limited to, preferably not less than 10000 and not larger than 100000, more preferably not less than 15000 and not larger than 80000, and further preferably not less than 20000 and not larger than 50000. The mass average molecular weight can be measured by a method such as gel permeation chromatography (GPC) or a solution viscosity method.

The average fiber diameter of the carbon fibers is preferably 0.5 to 40 $\mu$m. If the average fiber diameter is smaller than 0.5 pm, the liquid permeability deteriorates. On the other than, if the average fiber diameter is larger than 40 pm, the reaction surface area of the fiber portion becomes decreased, resulting in an increase in cell resistance. The average fiber diameter is more preferably 3 to 20 $\mu$m in consideration of the balance between the liquid permeability and the reaction surface area.

In the present invention, a structure of the above carbon fibers is preferably used as a base material. Accordingly, the strength is improved and handling and processability are facilitated. Specific examples of the structure include spun yarns, bundled filament yarns, non-woven fabrics, knitted fabrics, and woven fabrics, and special knitted/woven fabrics described in, for example, Japanese Laid-Open Patent Publication No. S63-200467, which are sheet-like objects made of carbon fibers, and paper made of carbon fibers. Among them, non-woven fabrics, knitted fabrics, woven fabrics, and special woven/knitted fabrics which are made of carbon fibers, and paper made of carbon fibers are more preferable from the viewpoint of handleability, processability, productivity, etc.

Herein, in the case where a non-woven fabric, a knitted fabric, a woven fabric, or the like is used, the average fiber length is preferably 30 to 100 mm. In addition, in the case where paper made of carbon fibers is used, the average fiber length is preferably 5 to 30 mm. When the average fiber length is set to be within the above range, a uniform fiber structure can be obtained.

As described above, the carbon fibers are obtained by heating and carbonizing the precursor of the organic fibers. The "heating and carbonizing" preferably includes at least a flameproofing step and a carbonizing (calcining) step. However, among them, the carbonizing step does not necessarily have to be performed after the flameproofing step as described above. The carbonizing step may be performed after flameproofed fibers are impregnated with the graphite particles and the carbon material as in EXAMPLES described later. In this case, the carbonizing step after the flameproofing step can be omitted.

The above flameproofing step means a step of heating the precursor of the organic fibers under an air atmosphere preferably at a temperature of not lower than 180°C and not higher than 350°C to obtain flameproofed organic fibers. The heating temperature is more preferably not lower than 190°C and further preferably not lower than 200°C. The heating temperature is preferably not higher than 330°C and more preferably not higher than 300°C. When the heating is performed within the above temperature range, the organic fibers are not thermally decomposed, and the content ratios of nitrogen and hydrogen in the organic fibers can be reduced while the organic fibers are maintained in the form of the carbon fibers, to improve the carbonization rate. In the flameproofing step, the organic fibers may be thermally contracted, and the molecular orientation thereof may be broken, to reduce the electrical conductivity of the carbon fibers. Therefore, the organic fibers are preferably flameproofed under a strained or drawn state, and more preferably flameproofed under a strained state.

The carbonizing step means a step of heating the flameproofed organic fibers obtained as described above, under an inert atmosphere (preferably, under a nitrogen atmosphere) preferably at a temperature of not lower than 1000°C and not higher than 2000°C to obtain the carbon fibers. The heating temperature is more preferably not lower than 1100°C and further preferably not lower than 1200°C. The heating temperature is more preferably not higher than 1900°C. When the carbonizing step is performed within the above temperature range, the carbonization of the organic fiber progresses to obtain the carbon fibers having a pseudo-graphite crystal structure.

Organic fibers have crystallinities different from each other. Therefore, the heating temperature in the carbonizing step can be selected according to the type of the organic fibers as a raw material. For example, in the case where an acrylic resin (preferably, polyacrylonitrile) is used as the organic fibers, the heating temperature is preferably not lower than 800°C and not higher than 2000°C, and more preferably not lower than 1000°C and not higher than 1800°C.

The above flameproofing step and carbonizing step are preferably continuously performed. A temperature rising rate is preferably not larger than 20°C/minute and more preferably not larger than 15°C/minute when the temperature rises from the flameproofing temperature to the carbonizing temperature. When the temperature rising rate is within the above range, the carbon fibers that maintain the shape of the organic fibers and have excellent mechanical properties can be obtained. The lower limit of the temperature rising rate is preferably not less than 5°C/minute in consideration of the mechanical properties and the like.

As will be described in detail later for the carbon material (C), the electrode material of the present invention satisfies a condition that Lc(C)/Lc(A) satisfies 1.0 to 5 when Lc(A) and Lc(C) represent crystallite sizes, in the c-axis direction, obtained by X-ray diffraction in the carbon fibers (A) and the carbon material (C), respectively, as defined in the above-described (3). Therefore, in the present invention, Lc(A) in the carbon fibers (A) is not particularly limited as long as the above-described (3) is satisfied, but Lc(A) is preferably 1 to 6 nm. Accordingly, appropriate electron conductivity, oxidation resistance with respect to sulfuric acid solvent and the like, and an effect of facilitating addition of oxygen functional groups can be effectively exhibited. A method for measuring Lc(A) and Lc(C) will be described in detail later in Examples.

[Carbon particles (B) other than graphite particles]

In the present invention, the "carbon particles other than graphite particles" are useful for increasing the reaction surface area to achieve low resistance. In the present invention, carbon particles that satisfy the above (1) and (2) are used for achieving low resistance.

First, the particle diameter of the "carbon particles other than graphite particles" used in the present invention is not larger than 1 $\mu$m as defined in the above (1), and is preferably not larger than 0.5 $\mu$m. If the particle diameter is larger than 1 $\mu$m, the reaction surface area is decreased, and the resistance is increased. Here, the "particle diameter" means an average particle diameter (D50) as a median diameter at 50% in a particle diameter distribution obtained by a dynamic light scattering method or the like. As the carbon particles other than graphite particles, a commercially available product may be used. In this case, the particle diameter shown in the catalog can be adopted. The lower limit of the particle diameter is preferably not less than 0.005 $\mu$m.

The BET specific surface area, of the "carbon particles other than graphite particles" used in the present invention, obtained from a nitrogen adsorption amount is preferably not less than 20 $m^2$/g, more preferably not less than 30 $m^2$/g, and further preferably not less than 40 $m^2$/g. If the BET specific surface area is less than 20 $m^2$/g, the exposure of the edges of the carbon particles is reduced, and the contact area with the electrolyte is also reduced, so that the desired low resistance is not achieved. The upper limit of the BET specific surface area is not particularly limited from the above viewpoint, but, in general, is preferably not larger than 2000 $m^2$/g, considering that the viscosity of a dispersion solution is likely to increase with bulky particles having a large surface area and the processability into a sheet or the like deteriorates. Here, the "BET specific surface area obtained from a nitrogen adsorption amount" means a specific surface area calculated from the amount of gas molecules adsorbing when nitrogen molecules are caused to adsorb to solid particles.

Furthermore, Lc(B) in the "carbon particles other than graphite particles" used in the present invention is not larger than 10 nm as defined in the above (2). If carbon particles having Lc(B) larger than 10 nm and high crystallinity are used, it is difficult to introduce oxygen functional groups, so that the affinity for an aqueous electrolyte is reduced near the carbon particles, the reaction activity is decreased, and the resistance is increased. Lc(B) is preferably not larger than 6 nm. The lower limit of Lc(B) is not particularly limited from the above viewpoint, but, in general, is preferably not less than 0.5 nm in consideration of oxidation resistance to the electrolyte, etc. A method for measuring Lc(B) and La(B) will be described in detail later in Examples.

As the "carbon particles other than graphite particles" used in the present invention, for example, carbon particles having high reactivity, a large specific surface area, and low crystallinity, such as carbon blacks including acetylene black (acetylene soot), oil black (furnace black, oil soot), Ketjen black, gas black (gas soot), etc., are often used. In addition to the above, examples of the "carbon particles other than graphite particles" used in the present invention include carbon nanotubes (CNT), carbon nanofibers, carbon aerogel, mesoporous carbon, graphene, graphene oxide, N-doped CNT, boron-doped CNT, and fullerenes. From the viewpoint of raw material price, carbon blacks are preferably used.

The content of the "carbon particles other than graphite particles" used in the present invention is preferably not less than 5% and preferably not less than 10%, as a mass ratio to the total content of the carbon fibers (A), the carbon particles (B) other than graphite particles, which are described above, and the carbon material (C) described below. Accordingly, the carbon particles other than graphite particles are bound by the carbon material, and the resistance is reduced. It should be noted that if the amount of the carbon particles (B) other than graphite particles is excessive, the binding properties by the carbon material becomes insufficient to cause falling-off of particles, and the liquid permeability deteriorates due to improvement in filling density, so that the desired low resistance is not achieved. Therefore, in general, the upper limit of the content is preferably not larger than 90%. The content of the carbon fibers (A) used for calculating the above content is the content of a structure such as a non-woven fabric in the case where the structure is used as the base material.

In the present invention, the mass ratio of the carbon material (C) described below to the carbon particles (B) other than graphite particles is preferably not less than 0.2 and not larger than 10, and more preferably not less than 0.3 and not larger than 7. If the above ratio is less than 0.2, more carbon particles other than graphite particles fall off, so that the carbon particles are not sufficiently bound by the carbon material. On the other hand, if the above ratio is larger than 10, the carbon edge surfaces of the carbon particles, which are reaction fields, are covered, so that desired low resistance is not achieved.

[Carbon material (C)]

The carbon material used in the present invention is added as a binding agent (binder) for firmly binding carbon fibers and carbon particles other than graphite particles, which cannot be intrinsically bound to each other. In the present invention, Lc(C)/Lc(A) needs to satisfy 1.0 to 5 when Lc(A) and Lc(C) represent the crystallite sizes, in the c-axis direction, obtained by X-ray diffraction in the carbon fibers (A) and the carbon material (C), respectively, as defined in the above (3).

When the carbon material having binding properties and high crystallinity with respect to the carbon fibers (A) is used as described above, the resistance to electron conductivity between the carbon particles (B) and the carbon fibers (A) is decreased, and the electron conductive path between the carbon particles (B) and the carbon fibers (A) becomes smooth. In addition, it has been found that, since the carbon material firmly binds the carbon fibers via the carbon particles other than graphite particles, an efficient conductive path can be formed, so that the effect of achieving low resistance by the addition of the above-described carbon particles other than graphite particles is more effectively exhibited.

If the ratio Lc(C)/Lc(A) is less than 1.0, the above effect is not effectively exhibited. The above ratio is preferably not less than 1.5 and more preferably not less than 3.0. On the other hand, if the above ratio is larger than 5, it is difficult to add oxygen functional groups to the carbon material portion. The above ratio is preferably not larger than 4.5 and more preferably not larger than 4.0.

In the present invention, the range of Lc(C) is not particularly limited as long as the ratio Lc(C)/Lc(A) satisfies the above range, but, from the viewpoint of achieving lower resistance, Lc(C) is preferably not larger than 10 nm and more preferably not larger than 7.5 nm. The lower limit of Lc(C) is not particularly limited from the above viewpoint, but, in general, is preferably not less than 3 nm in consideration of electron conductivity, etc.

The mass ratio [(C)/{(A)+(B)+(C)}] of the content of the carbon material (C) to the total content of the carbon fibers (A), the carbon particles (B) other than graphite particles, and the carbon material (C), which are described above, is preferably not less than 14.5%, more preferably not less than 15%, and further preferably not less than 17%. When the content ratio of the carbon material is increased as described above, both the carbon fibers and the carbon particles other than graphite particles can be sufficiently bound, so that the binding effect by the addition of the carbon material is effectively exhibited. In general, the upper limit of the mass ratio is preferably not larger than 90% in consideration of the liquid permeability of the electrolyte, etc.

Moreover, the mass ratio [(B)+(C)/{(A)+(B)+(C)}] of the sum of the contents of the carbon particles (B) other than graphite particles and the carbon material (C) to the total content of the carbon fibers (A), the carbon particles (B) other than graphite particles, and the carbon material (C), which are described above, is not particularly limited as long as the above requirements are satisfied, but, this mass ratio is, for example, 50 to 65%. Generally, when the above mass ratio is larger, the supported amounts of these materials are increased, so that low resistance is achieved. According to the present invention, the mesopore specific surface area of the electrode material is very high. Thus, even if the above mass ratio is reduced to be, for example, not larger than 65% as in Nos. 1 to 6 in Table 3 shown below, an electrode material having the desired low resistance is obtained.

The type of the carbon material (C) used in the present invention may be any type when the carbon fibers (A) and the carbon particles (B) other than graphite particles can be bound. Specifically, the type of the carbon material (C) is not particularly limited as long as binding properties are exhibited during carbonizing when the electrode material of the present invention is produced. Examples of such a carbon material include: pitches such as coal-tar pitch and coal-based pitch; resins such as phenol resin, benzoxazine resin, epoxide resin, furan resin, vinylester resin, melamine-formaldehyde resin, urea-formaldehyde resin, resorcinol-formaldehyde resin, cyanate ester resin, bismaleimide resin, polyurethane resin, and polyacrylonitrile; furfuryl alcohol; and rubber such as acrylonitrile-butadiene rubber. These may be commercially available products.

Among them, particularly, pitches such as coal-tar pitch and coal-based pitch which are easily crystallizable are preferable since the target carbon material (C) can be obtained at a low calcining temperature. Phenol resin is also preferably used since phenol resin has little fluctuation of crystallization at calcining temperature which allows easy control of crystallization. Polyacrylonitrile resin is also preferably used since the target carbon material (C) can be obtained when the calcining temperature is increased. Pitches are particularly preferable.

According to a preferable aspect of the present invention, since a phenol resin is not used, a harmful effect (generation of formaldehyde and formaldehyde odor at room temperature) caused by the phenol resin is not exerted, so that, for example, generation of odor at room temperature is advantageously prevented. On the other hand, in Patent Literature 1, a phenol resin is used as an adhesive. Therefore, in addition to the above-described harmful effect being exerted, for example, equipment for controlling the concentration of formaldehyde at a working site such that the concentration of formaldehyde is not higher than a control concentration needs to be additionally provided, and this is disadvantageous from the viewpoint of cost and workability.

Here, pitches that are particularly preferably used will be described in detail. As for the above-described coal-tar pitch and coal-based pitch, the content ratio of a mesophase (liquid crystal phase) can be controlled by an infusibilizing temperature and time. If the content of the mesophase is small, a pitch in a melted state is obtained at a relatively low temperature or a pitch in a liquid state is obtained at room temperature. On the other hand, if the content ratio of the metaphase is large, the pitch is melted at a high temperature, resulting in a high carbonization yield. In the case where pitches are used as the carbon material (C), the content ratio of the mesophase is preferably larger (that is, carbonization rate is higher), and is, for example, preferably not less than 30% and more preferably not less than 50%. Accordingly, fluidity at the time of melting is reduced, and the carbon fibers can be bound to each other through the carbon particles without excessively covering the surfaces of the carbon particles other than graphite particles. The upper limit of the content ratio is, for example, preferably not larger than 90% in consideration of exhibition of binding properties, etc.

From the same viewpoint as described above, the melting point of the pitch is preferably not lower than 100°C and more preferably not lower than 200°C. Accordingly, in addition to the above effect being obtained, odor in the impregnating process can be reduced, so that such a melting point is also preferable from the viewpoint of processability. The upper limit of the melting point is, for example, preferably not higher than 350°C in consideration of exhibition of binding properties, etc.

(Characteristics of electrode material of the present invention)

The electrode material of the present invention has a very large mesopore specific surface area of not less than 30 m$^2$/g, which is obtained from a nitrogen adsorption amount. When the mesopore specific surface area is larger, lower resistance can be achieved, so that an electrode material having excellent battery performance is obtained. According to the present invention, it is considered that the desired low resistance can be achieved due to an increase in the exposure of the edge surfaces of the carbon particles (B) other than graphite particles and an increase in the contact area with the electrolyte. The above mesopore specific surface area is preferably not less than 40 m$^2$/g, more preferably not less than 60 m$^2$/g, further preferably not less than 100 m$^2$/g, even more preferably not less than 150 m$^2$/g, and particularly preferably not less than 180 m$^2$/g. The upper limit of the mesopore specific surface area is not particularly limited from the above viewpoint, but, in general, is preferably not larger than 300 m$^2$/g in consideration of the formation of a conductive path between particles, the adhesiveness of the carbon particles other than graphite particles to fibers, etc.

As described above, the present invention is a technique for decreasing overall cell resistance by increasing the mesopore specific surface area (increasing the specific surface area). This overall cell resistance is specifically represented by the sum of reaction resistance and conductive resistance (overall cell resistance = reaction resistance + conductive resistance). Specifically, the present invention is intended to decrease the overall cell resistance by decreasing the reaction resistance, not to decrease the conductive resistance. If the conductive resistance is decreased, the repulsive force of the material is excessively increased, so that the risk of fibers piercing the ion-exchange membrane and causing a short circuit is increased, resulting in a problem that the battery efficiency is likely to be decreased. On the other hand, in the present invention, it is considered that, since the reaction resistance is decreased by increasing the specific surface area, the effect of decreasing the overall cell resistance is exhibited without excessively increasing the repulsive force, and as a result, stable battery efficiency is easily achieved.

In the present invention, the mesopore specific surface area is measured, with a mesopore region having a pore diameter of not less than 2 nm and less than 40 nm as a measurement target, based on an adsorption curve when nitrogen gas is caused to adsorb to the electrode material. The detailed method for measuring the mesopore specific surface area will be described in detail in Examples.

Furthermore, the BET specific surface area, of the electrode material of the present invention, obtained from a nitrogen adsorption amount is preferably not less than 40 m$^2$/g and more preferably not less than 60 m$^2$/g. If the BET specific surface area is less than 40 m$^2$/g, the desired low resistance is not achieved due to a reduction in the exposure of the edge surfaces of the carbon particles (B) other than graphite particles and a reduction in the contact area with the electrolyte. The upper limit of the BET specific surface area is not particularly limited from the above viewpoint, but, in general, is preferably not larger than 500 m$^2$/g in consideration of the formation of a conductive path between particles, the adhesiveness of the carbon particles other than graphite particles to fibers, etc.

Furthermore, the electrode material of the present invention satisfies the condition that the number of oxygen atoms bound to the surface of the carbon electrode material is not less than 1% of the total number of carbon atoms on the surface of the carbon electrode material. Hereinafter, the ratio of the number of bound oxygen atoms to the total number of carbon atoms is sometimes abbreviated as O/C. The O/C can be measured by surface analysis such as X-ray photoelectron spectroscopy (XPS) or fluorescent X-ray analysis.

When the electrode material in which the O/C is not less than 1% is used, the electrode reaction velocity can be significantly increased, thereby achieving low resistance. Furthermore, the hydrophilicity can be enhanced by controlling the O/C, so that a water flow rate (preferably, not less than 0.5 mm/sec) of the electrode material as described later can be assured. On the other hand, if an electrode material having a low oxygen concentration in which the O/C is less than 1% is used, the electrode reaction rate at the time of discharging is decreased, so that the electrode reaction activity cannot be enhanced. As a result, the resistance is increased. Although the details of the reason why the electrode reaction activity (in other words, voltage efficiency) is enhanced by using the electrode material having a lot of oxygen atoms bound to the surface thereof as described above, are not clear, a lot of oxygen atoms on the surface are considered to effectively act on affinity between the carbon material (C) and the electrolyte, emission and reception of electrons, desorption of complex ions from the carbon material, complex exchange reaction, etc.

The electrode material of the present invention has excellent hydrophilicity. The hydrophilicity can be confirmed by a water flow rate when a water droplet is dropped after the electrode material is oxidized in a dry process. The water flow rate of the electrode material of the present invention is preferably not less than 0.5 mm/sec. Accordingly, the affinity for the electrolyte can be determined as being sufficient. The higher the water flow rate of the electrode material is, the better the electrode material is. The water flow rate is more preferably not less than 1 mm/sec, further preferably not less than 5 mm/sec, and further preferably not less than 10 mm/sec.

The weight per unit area of the electrode material of the present invention is preferably 50 to 500 g/m$^2$ and more preferably 100 to 400 g/m$^2$ in the case where the thickness (hereinafter, referred to as "spacer thickness") of the spacer 2 between the current collecting plate 1 and the ion-exchange membrane 3 is 0.3 to 3 mm. When the weight per unit area is controlled to be within the above range, damage to the ion-exchange membrane 3 can be prevented while the liquid permeability is ensured. Particularly, in recent years, the thickness of the ion-exchange membrane 3 tends to be decreased from the viewpoint of low resistance, and treatment and usage for reducing damage to the ion-exchange membrane 3 is very important. Furthermore, from the above viewpoint, as for the electrode material of the present invention, a non-woven fabric or paper having one face flattened is more preferably used as the base material. Any known flattening method can be applied. Examples of the flattening method include a method of applying a slurry to one face of the carbon fibers and drying the slurry thereon, and a method of impregnation and drying on a smooth film formed of PET or the like.

The thickness of the electrode material of the present invention is preferably at least larger than the spacer thickness. For example, in the case where a fabric such as a non-woven fabric having a low density is used as the carbon fibers, and the carbon particles other than graphite particles and the carbon material having binding properties, which are used for the electrode material of the present invention, are carried in the fabric, the thickness of the electrode material is preferably 1.5 to 6.0 times the spacer thickness. In the case where the thickness is excessively large, the ion-exchange membrane 3 may be pierced due to compression stress of a sheet-shaped object. Therefore, as the electrode material of the present invention, a material having a compression stress of not larger than 9.8 N/cm$^2$ is preferably used. For example, two or three layers of the electrode material of the present invention may be stacked and used in order to adjust the compression stress or the like according to the weight per unit area and/or the thickness of the electrode material of the present invention. Alternatively, another form of an electrode material may also be used in combination.

The electrode material of the present invention is used for a negative electrode of a redox flow battery in which a manganese/titanium-based electrolyte is used (manganese/titanium-based redox flow battery). As described above, as for the manganese/titanium-based electrolyte, manganese is used for a positive electrode, and titanium is used for a negative electrode, and the manganese/titanium-based electrolyte is not particularly limited as long as the electrolyte contains these active materials.

Meanwhile, the type of an electrode material used for a positive electrode of a manganese/titanium-based redox flow battery is not particularly limited as long as such an electrode material is one generally used in this technical field. Carbon fiber paper as used for a fuel cell, and the like, may be used, or the electrode material of the present invention may be used for a positive electrode as it is. It is confirmed that, for example, for a short-term use (for example, in the case where the total time of a charging and discharging test is 3 hours as in Examples described later), the electrode material of the present invention can be used for a positive electrode, and the cell resistance during initial charging and discharging can be decreased (see Examples described later). In Examples described later, the same sample was used for a positive electrode and a negative electrode. However, the present invention is not limited thereto, and electrode materials having different compositions may be used as long as the requirements of the present invention are satisfied.

It should be noted that, since an electrode is decomposed into CO and $CO_2$ due to the strong oxidizing power of manganese during repeated charging and discharging over a long period of time, it is recommended to use an electrode having oxidation resistance (for example, polyacrylonitrile-based carbon fiber felt calcined at 2000°C or higher, etc.) as a positive electrode and use the electrode material of the present invention on the negative electrode side.

(Method for producing electrode material of the present invention)

Next, a method for producing the electrode material of the present invention will be described. The electrode material of the present invention can be produced through a carbonizing step, a primary oxidization step, a graphitization step, and a secondary oxidization step after the carbon fibers (base material) are impregnated with the carbon particles other than graphite particles and a precursor (before carbonized) of the carbon material. The present invention is characterized in that the carbonizing step and the graphitization step are performed under a predetermined condition, and oxidization is performed twice such that oxidization is performed before and after the graphitization step. In particular, the most significant feature of the present invention is that oxidization is performed twice. Here, the "primary oxidization step" means the first oxidization, and the "secondary oxidization step" means the second oxidization. As demonstrated in Examples described later, it is found from the results of studies by the present inventors that the desired large mesopore specific surface area was not obtained in comparative examples in which oxidation was performed only after the graphitization step (that is, oxidation was performed once).

Each step will be described below.

(Step of impregnating carbon fibers with carbon particles other than graphite particles and precursor of carbon material)

First, the carbon fibers are impregnated with the carbon particles other than graphite particles and the precursor of the carbon material. Any known method can be adopted for impregnating the carbon fibers with the carbon particles other than graphite particles and the precursor of the carbon material. An example of such a method is a method of heating and melting the above carbon material precursor, dispersing the carbon particles other than graphite particles in the obtained melt, immersing the carbon fibers in the melted dispersion liquid, and then cooling the carbon fibers to room temperature. Alternatively, a method of dispersing the above carbon material precursor and the carbon particles other than graphite particles in a solvent such as an alcohol or water to which a binder (provisional adhesive) such as polyvinyl alcohol which disappears during carbonization is added, immersing the carbon fibers in the dispersion liquid, and then heating and drying the carbon fibers, as described later in Examples, can be used. The excess liquid of the above melted dispersion liquid or dispersion liquid in which the carbon fibers have been immersed can be removed by, for example, a method in which the excess dispersion liquid provided when the carbon fibers are immersed in the dispersion liquid is squeezed through nip rollers having a predetermined clearance, or a method in which the surface of the excess dispersion liquid provided when the carbon fibers are immersed in the dispersion liquid is scraped by a doctor blade or the like.

Thereafter, drying is performed under an air atmosphere at, for example, 80 to 150°C.

(Carbonizing step)

The carbonizing step is performed for calcining the product obtained by the impregnation in the above step. Accordingly, the carbon fibers are bound to each other through the carbon particles other than graphite particles. In the carbonizing step, preferably, decomposed gas generated during carbonization is sufficiently removed. For example, heating is preferably performed at a temperature of 500°C or higher and lower than 2000°C under an inert atmosphere (preferably, under a nitrogen atmosphere). The heating temperature is preferably 600°C or higher, further preferably 800°C or higher, even more preferably 1000°C or higher, and even further preferably 1200°C or higher, and is more preferably 1400°C or lower and further preferably 1300°C or lower.

Also, the heating temperature under a nitrogen atmosphere is preferably 1 to 2 hours as for example. The heating within this short time promotes enough removal of decomposed gas generated during the bonding of the carbon fibers with each other and the carbonizing step.

As described above, although treatment corresponding to the carbonizing step may be performed after flameproofing the fibers, the carbonizing treatment after flameproofing the fibers may be omitted. That is, the method for producing the electrode material of the present invention is mainly classified into the following method 1 and method 2.

- Method 1: Flameproofing of the fibers → carbonization of the fibers → impregnation with the carbon particles other than graphite particles and the carbon material → carbonization →primary oxidization step → graphitization → secondary oxidization

- Method 2: Flameproofing of the fibers → impregnation with the carbon particles other than graphite particles and the carbon material → carbonization →primary oxidization step → graphitization → secondary oxidization

According to the method 1, carbonization is performed twice and the processing cost is thus increased. However, since a sheet used as the electrode material is unlikely to be influenced by a difference in a volume shrinkage rate, the obtained sheet is advantageously unlikely to be deformed (warped). Meanwhile, according to the method 2, the carbonizing step is performed only once and the processing cost can thus be reduced. However, the obtained sheet is likely to be deformed due to a difference in a volume shrinkage rate during carbonization of each material. Whether to adopt either of the above methods 1 and 2 may be determined as appropriate in consideration of these points.

(Primary oxidization step)

In the present invention, it is important to perform the first oxidization in a dry process after the above carbonizing step and before the graphitization step described below. Accordingly, the carbon fibers are activated, and the surfaces of the carbon particles other than graphite particles are exposed by removing the carbon material. As a result, the mesopore specific surface area of the electrode material is significantly increased, and the reactivity is improved, so that low resistance is achieved.

In general, oxidization can be performed in either a dry process or a wet process. Examples of oxidization include wet chemical oxidization and electrolytic oxidization, and dry oxidization. In the present invention, dry oxidization is performed from the viewpoint of processability and production cost. Preferably, oxidization is performed under an air atmosphere. The heating temperature is controlled to be not lower than 500°C and not higher than 900°C. Accordingly, oxygen functional groups are introduced into the surface of the electrode material, and the above effect is effectively exhibited. The heating temperature is more preferably not lower than 550°C. In addition, the heating temperature is more preferably not higher than 800°C and further preferably not higher than 750°C.

Moreover, the primary oxidization is preferably performed for, for example, 5 minutes to 1 hour. If the primary oxidization is performed for a time shorter than 5 minutes, the entirety of the carbon electrode material may not be uniformly oxidized. On the other hand, if the primary oxidization is performed for a time longer than 1 hour, the strength of the carbon electrode material may be decreased or the working efficiency may be decreased.

Here, in the primary oxidization step, from two viewpoints of increasing the specific surface area of the electrode material and maintaining the mechanical strength of the electrode material, the mass yield (that is, the ratio of the mass of the electrode material after the primary oxidization to the mass of the electrode material before the primary oxidization) of the electrode material obtained from the masses before and after the primary oxidization step is preferably adjusted to be, for example, not less than 85% and not larger than 95%. The mass yield can be adjusted by adjusting, for example, the processing time or the heating temperature in the dry air oxidization as appropriate.

(Graphitization step)

The graphitization step is performed in order to sufficiently increase the crystallinity of the carbon material, improve electron conductivity, and improve oxidation resistance with respect to a sulfuric acid solution in an electrolyte, etc. After the primary oxidization step, heating is further performed under an inert atmosphere (preferably, under a nitrogen atmosphere) preferably at a temperature that is not lower than 1300°C and not higher than 2300°C and that is higher than the heating temperature in the carbonizing step, and more preferably at a temperature of not lower than 1500°C. The upper limit of the temperature is preferably not higher than 2000°C in consideration of imparting high electrolyte affinity to the carbon material.

(Secondary oxidization step)

After the graphitization step, the secondary oxidization is further performed, whereby oxygen functional groups such as a hydroxyl group, a carbonyl group, a quinone group, a lactone group, and a free-radical oxide are introduced into the surface of the electrode material. As a result, the above-described ratio O/C ≥ 1% can be achieved. These oxygen functional groups make a large contribution to electrode reaction, thereby achieving sufficiently low resistance. Furthermore, the water flow rate for water can also be increased.

As the secondary oxidization step, for example, various treatment steps such as wet chemical oxidization and electrolytic oxidization, and dry oxidization can be applied. In the present invention, dry oxidization is performed from the viewpoint of processability and production cost. Preferably, oxidization is performed under an air atmosphere. The heating temperature is controlled to be not lower than 500°C and not higher than 900°C. Accordingly, oxygen functional groups are introduced into the surface of the electrode material, and the above effect is effectively exhibited. The heating temperature is preferably not lower than 600°C and more preferably not lower than 650°C. In addition, the heating temperature is preferably not higher than 800°C and more preferably not higher than 750°C.

Moreover, the secondary oxidization is preferably performed for, for example, 5 minutes to 1 hour as in the above primary oxidization. If the primary oxidization is performed for a time shorter than 5 minutes, the entirety of the carbon electrode material may not be uniformly oxidized. On the other hand, if the primary oxidization is performed for a time longer than 1 hour, the strength of the carbon electrode material may be decreased or the working efficiency may be decreased.

Here, the condition for the first oxidization and the condition for the second oxidization may be the same or different from each other as long as the above conditions are satisfied. However, the heating temperature in the second oxidization (secondary oxidization) is preferably higher than that in the first oxidization (primary oxidization). In the primary oxidization, graphitization for improving crystallinity has not been performed yet and oxidization is considered to proceed expeditiously. Therefore, the heating temperature is controlled to be lower than that in the secondary oxidization.

Furthermore, in the secondary dry oxidization step, from the viewpoint of maintaining the mechanical strength of the electrode material, the mass yield (that is, the ratio of the mass of the electrode material after the secondary oxidization liquid to the mass of the electrode material before the secondary oxidization) of the electrode material obtained from the masses before and after the oxidization is preferably adjusted to be not less than 90% and not larger than 96%. The above mass yield can be adjusted by adjusting, for example, the processing time or the heating temperature in the dry air oxidization as appropriate.

This application claims priority to Japanese Patent Application No. 2019-045664 filed on March 13, 2019, the entire contents of which are incorporated herein by reference.

EXAMPLES

The present invention will be described in more detail below by means of examples and comparative examples. However, the present invention is not limited by the following examples. Hereinafter, % means "% by mass" unless otherwise specified.

In the examples, the following items were measured. The details of the measurement methods are as follows.

(1) Measurement of crystallite size (Lc) in c-axis direction by X-ray diffraction

Specifically, Lc(A) of the carbon fibers, Lc(B) of carbon particles other than graphite particles, La(B), and Lc(C) of the carbon material were measured as follows.

The carbon fibers, the carbon particles other than graphite particles, and the carbon material (individual elements) used in the examples were sequentially subjected to the same heating process as in Example 1, and finally processed samples were used for the measurement. Basically, it is considered that the carbon crystallinity is influenced dominantly by thermal energy imparted to the sample, and the crystallinity of Lc is determined by a thermal history of the sample at the highest temperature. However, it is considered that a graphene laminate structure formed in the graphitization step may be broken depending on a degree of the succeeding oxidization, and the crystallinity may be reduced due to generation of a defective structure, etc. Therefore, the finally processed samples were used.

Each individual element sample obtained as described above was ground by using an agate mortar until the particle diameter became about 10 $\mu$m. About 5% by mass of X-ray standard high-purity silicon powder as an internal standard substance was mixed with the ground sample, and a sample cell was filled therewith, and a wide angle X-ray measurement was performed by diffractometry using CuK$\alpha$ rays as a ray source.

For the carbon fibers (A), the graphite particles (B), and the carbon material (C) for binding the carbon fibers (A) and the graphite particles (B), which were used for the electrode material of the present invention, peaks were separated from a chart obtained by the wide-angle X-ray measurement to calculate the respective Lc values. Specifically, a peak having a top in a range where twice ($2\theta$) a diffraction angle $\theta$ was 26.4° to 26.6° was set as the carbon particles (B) other than graphite particles, and a peak having a top in a range where twice ($2\theta$) the diffraction angle $\theta$ was 25.3° to 25.7° was set as the carbon material (C). A peak shape as a sine wave was determined from each peak top, and a peak shape as a sine wave was thereafter determined from a foot portion appearing near 24.0° to 25.0°, and set as the carbon fibers (A). Each Lc was calculated by the following method based on the three peaks separated by the above method.

For correction of a curve, the following simple method was used without performing correction related to so-called Lorentz factor, polarization factor, absorption factor, atomic scattering factor, and the like. Specifically, the substantial intensity from the baseline of a peak corresponding to <002> diffraction was re-plotted to obtain a <002> corrected intensity curve. The crystallite size Lc in the c-axis direction was obtained by the following equation from the length (half width $\beta$) of a line segment obtained by a line that was parallel to an angle axis and drawn at 1/2 of the peak height intersecting the corrected intensity curve.

$$Lc = (k \cdot \lambda)/(\beta \cos\theta)$$

Here, structure factor k = 0.9, wavelength $\lambda$ = 1.5418 Å, $\beta$ represents the half width of a <002> diffraction peak, and $\theta$ represents a <002> diffraction angle.

(2) Measurement of specific surface area of electrode material

(2-1) Measurement of a mesopore specific surface area (S2-40 nm: $m^2$/g) having a pore diameter of not less than 2 nm and less than 40 nm.

About 50 mg of the sample was weighed and vacuum-dried at 130°C for 24 hours.
For the obtained dried sample, a nitrogen adsorption amount was measured using an automatic specific surface area measurement device (GEMINI VII, manufactured by SHIMADZU CORPORATION) by a gas adsorption method using nitrogen gas, and a nitrogen adsorption isotherm during adsorption was analyzed by a BJH method to obtain a mesopore specific surface area ($m^2$/g) having a pore diameter of not less than 2 nm and less than 40 nm.

(2-2) Measurement of BET specific surface area (BET: $m^2$/g)

About 50 mg of the sample was weighed and vacuum-dried at 130°C for 24 hours. For the obtained dried sample, a nitrogen adsorption amount was measured using an automatic specific surface area measurement device (GEMINI VII, manufactured by SHIMADZU CORPORATION) by using a gas adsorption method using nitrogen gas, and a BET specific surface area ($m^2$/g) was determined by a multipoint method based on the BET method.

(3) Measurement of O/C by XPS surface analysis

A 5801MC device available from ULVAC-PHI, Inc., was used for measurement by X-ray photoelectron spectroscopy abbreviated as ESCA or XPS.
First, the sample was fixed onto a sample holder by a Mo plate, exhaustion was sufficiently performed in a preliminary exhaustion chamber, and the sample was thereafter put into a chamber in a measurement chamber. Monochromated AlK$\alpha$ rays were used as a ray source, output was set at 14 kV and 12 mA, and the degree of vacuum in the device was set to $10^{-8}$ torr.
Scanning for all elements was performed to examine the structures of the surface elements, and narrow scanning for detected elements and anticipated elements was performed to assess an existence ratio thereof.
The ratio of the number of oxygen atoms bound to the surface to the total number of carbon atoms on the surface was calculated as a percentage (%), to calculate O/C.

(4) Charging and discharging test

(4-1) Measurement of overall cell resistance (overall cell resistance at SOC of 50%)

An electrode material obtained in a method described below was cut out so as to have a 2.7 cm side in the up-down direction (liquid flowing direction), a 3.3 cm side in the width direction, and an electrode area of 8.91 $cm^2$. In this test, since the total time of charging and discharging is short, even if the electrode material of the present invention is also used for the positive electrode side, an adverse effect is not caused due to oxidative decomposition by manganese. Therefore, the same sample was used for a positive electrode and a negative electrode. The number of sheets of the sample was adjusted such that the weight per unit area in the cell at one electrode was 100 to 300 g/$m^2$, and the cell shown in FIG. 1 was assembled. A Nafion 211 membrane was used for the ion-exchange membrane, and the spacer thickness was set to 0.4 mm. The overall cell resistance (overall cell resistance at SOC of 50%, $\Omega \cdot cm^2$) was calculated at 144 mA/$cm^2$ in a voltage range of 1.55 to 1.00 V by the following equation from a voltage curve obtained after 10 cycles.
For both electrolytes of the positive electrode and the negative electrode, 5.0 moL/L sulfuric acid aqueous solutions in which 1.0 moL/L of titanium oxysulfate and 1.0 moL/L of manganese oxysulfate, respectively, were dissolved, were used. The amount of the electrolyte was made excessively large for the cell and the tube. A liquid flow rate was 10 mL per minute, and the measurement was performed at 35°C.
[formula 1]

$$\text{overall cell resistance} = (V_{C50}-V_{D50})/(2{\times}I)\ [\Omega\cdot cm^2]\quad(1)$$

where

$V_{C50}$ represents a charge voltage, obtained from an electrode curve, with respect to an electric quantity in the case of the state of charge being 50%.
$V_{D50}$ represents a discharge voltage, obtained from an electrode curve, with respect to an electric quantity in the case of the state of charge being 50%.

$$I = \text{current density }(mA/cm^2).$$

(4-2) Measurement of reaction resistance

In this example, a resistance component was separated and reaction resistance was also measured. As described above, overall cell resistance = reaction resistance + conductive resistance, and the present invention is intended to decrease the overall cell resistance by decreasing the reaction resistance.

Specifically, charging was performed at a current density of 144 mA/cm$^2$ for 5 minutes such that the state of charge (SOC) became 50%, and then an AC impedance was measured in a frequency range of 20 kHz to 0.01 Hz. A point of intersection with the real axis was set as conductive resistance ($\Omega\cdot cm^2$), and the sum of the diameter of a semi-circular portion and a straight line portion in a low frequency region was set as reaction resistance ($\Omega\cdot cm^2$), in the obtained Nyquist plot.

(5) Water flow test for water

One drop of ion-exchanged water was dropped onto an electrode from a 3 mm$\varphi$ pipette at a point that was 5 cm above the electrode, and the time until the dropped water droplet permeated was measured, and a water flow rate for water was calculated by the following equation.

$$\text{Water flow rate (mm/sec) for water} = \text{thickness (mm) of electrode}$$
$$\text{material / time (sec) until water droplet permeated}$$

Example 1

In this example, carbon blacks of A and B shown in Table 1 and graphite particles of D shown in Table 1 for comparison were used as the carbon particles (B) other than graphite particles, a (TGP-3500 pitch, manufactured by OSAKA KASEI CO., LTD) and b (TD-4304 phenol resin, manufactured by DIC Corporation, solid content: 40%) shown in Table 2 were used as the carbon material (C), and polyacrylonitrile fibers shown in Table 3 were used as the carbon fibers (A). As described below, an electrode material formed of a carbon sheet was produced and various items were measured. Each of A, B, D was a commercially available product. The average particle diameters shown in Table 1 are the values shown in the catalogs.

(No. 1)

First, 2.0% of RHEODOL TW-L120 (nonionic surfactant) manufactured by Kao Corporation, 2.0% of polyvinyl alcohol (provisional adhesive), 8.6% of the carbon material a, and 1.5% of A in Table 1 as carbon particles other than graphite were added to ion-exchanged water to prepare a dispersion liquid.

Carbon paper (CB0-030TP6, manufactured by ORIBEST CO., LTD., weight per unit area: 27 g/m$^2$, thickness: 0.51 mm) formed of carbonized polyacrylonitrile fibers (average fiber length: 6 mm) was immersed, as a base material (fiber structure), in the dispersion liquid thus obtained, and then passed through nip rollers to remove the excess dispersion liquid.

Next, the carbon paper was dried under an air atmosphere at 120°C for 20 minutes. Thereafter, the temperature was increased to 1000°C at a temperature rising rate of 5°C/minute in nitrogen gas, and the obtained paper was held at this temperature for 1 hour to be carbonized (calcined). Thereafter, oxidization was performed under an air atmosphere at 550°C for 25 minutes (first oxidization). After the oxidization, the obtained paper was cooled, and the temperature was further increased to 1500°C at a temperature rising rate of 5°C/minute in nitrogen gas, and the obtained paper was held at this temperature for 1 hour to be graphitized. Thereafter, oxidization was performed under an air atmosphere at 650°C for 5 minutes (second oxidization), to obtain an electrode material No.1 (weight per unit area: 75 g/m$^2$, thickness: 0.47 mm).

(No. 2)

An electrode material No.2 (thickness: 0.35 mm, weight per unit area: 78 g/m$^2$) was prepared by the same manner as in No.1 except that 2.0% of RHEODOL TW-L120 (nonionic surfactant) manufactured by Kao Corporation, 2.0% of polyvinyl alcohol (provisional adhesive), 15% of the carbon material a, and 1.5% of B in Table 1 as carbon particles other than graphite were added to ion-exchanged water to prepare a dispersion liquid.

(No. 3)

An electrode material No.3 (thickness: 0.37 mm, weight per unit area: 70 g/m$^2$) was prepared by the same manner as in No.1 except that 2.0% of RHEODOL TW-L120 (nonionic surfactant) manufactured by Kao Corporation, 2.0% of polyvinyl alcohol (provisional adhesive), 13% of the carbon material a, and 1.5% of B in Table 1 as carbon particles other than graphite were added to ion-exchanged water to prepare a dispersion liquid.

(No. 4)

An electrode material No.4 (thickness: 0.34 mm, weight per unit area: 64 g/m$^2$) was prepared by the same manner as in No.1 except that 2.0% of RHEODOL TW-L120 (nonionic surfactant) manufactured by Kao Corporation, 2.0% of polyvinyl alcohol (provisional adhesive), 8.6% of the carbon material a, and 1.5% of B in Table 1 as carbon particles other than graphite were added to ion-exchanged water to prepare a dispersion liquid.

(No. 5)

An electrode material No.5 (thickness: 0.49 mm, weight per unit area: 112 g/m$^2$) was prepared by the same manner as in No.3 except using a spunlace (manufactured by SHINWA Corporation, weight per unit area: 100 g/m$^2$, thickness: 0.9 mm) made of polyacrylonitrile fibers (average fiber length: 6 mm).

(No. 6)

An electrode material No.6 (thickness: 0.42 mm, weight per unit area: 116 g/m$^2$) was prepared by the same manner as in No.5 except the temperature of carbonization was changed to 1300°C.

(No. 7)

An electrode material No.7 (thickness: 0.39 mm, weight per unit area: 86 g/m$^2$) was prepared by the same manner as in No.1 without conducting the first oxidization between the carbonization and the graphitization.

(No.8)

An electrode material No.8 (thickness: 0.45 mm, weight per unit area: 94 g/m$^2$) was prepared by the same manner as in No.2 without conducting the first oxidization between the carbonization and the graphitization.

(No.9)

An electrode material No.9 (thickness: 0.42 mm, weight per unit area: 86 g/m$^2$) was prepared by the same manner as in No.3 without conducting the first oxidization between the carbonization and the graphitization.

(No.10)

An electrode material No. 10 (thickness: 0.40 mm, weight per unit area: 69 g/m$^2$) was prepared by the same manner as in No.4 without conducting the first oxidization between the carbonization and the graphitization.

(No. 11)

No. 11 was an example in which carbon particles other than graphite particles and carbon material were not used and only the carbon fibers was used. In detail, an electrode material No.11 (thickness: 0.33 mm, weight per unit area: 27 g/m$^2$) was prepared by subjecting the carbon paper directly to the same heating process as in No. 1.

(No.12)

In this example, 2.0% of RHEODOL TW-L120 (nonionic surfactant) manufactured by Kao Corporation, 2.0% of polyvinyl alcohol (provisional adhesive), 14.0% of the carbon material a, and 9.8% of graphite particles D (which does not satisfy the present inventive requirements) in Table 1 were added to ion-exchanged water to prepare a dispersion liquid.
An electrode material No.12 (thickness: 0.46 mm, weight per unit area: 129 g/m$^2$) was prepared by the same manner as in No.1 except using the dispersion liquid prepared above.

(No.13)

In this example, 2.0% of RHEODOL TW-L120 (nonionic surfactant) manufactured by Kao Corporation, 2.0% of polyvinyl alcohol (provisional adhesive), 3.8% of b (40% of solid content) in Table 2 as the carbon material, and 1.5% of B in Table 1 as the carbon particles other than graphite particles were added to ion-exchanged water to prepare a dispersion liquid.
An electrode material No.13 (thickness: 0.35 mm, weight per unit area: 55 g/m$^2$) was prepared by the same manner as in No.1 except using the dispersion liquid prepared above.

(No.14)

An electrode material No.14 (thickness: 0.4 mm, weight per unit area: 90 g/m$^2$) was prepared by immersing the carbon paper in the dispersion liquid by the same manner as in No. 1 and then the carbon paper was carbonized and graphitized by the same manner as in No. 6 and no oxidation was performed under an air atmosphere after the graphitization.
Table 2 shows the types of carbonaceous materials used, and Tables 3 and 4 show the measurement results of various items in above No. 1 to 14.

[Table 1]

| Carbon particles (B) | | | |
|---|---|---|---|
| Symbol | Average particle diameter | Lc(B) (nm) | BET specific surface area (m$^2$/g) |
| A | 400 nm or less | 2.0 | 800 |
| B | 400 nm or less | 2.2 | 1400 |
| D | 5 $\mu$m | 35.1 | 12 |

[Table 2]

| Carbon material (C) | | |
|---|---|---|
| Symbol | Type | Lc(C) (nm) |
| a | Pitch | 6.0 |
| b | Phenol resin | 1.5 |

[Table 3A]

| No. | Type of carbon particles (B) | Type of carbon material (C) | Carbon fibers (A) | | Lc(C)/Lc(A) |
|---|---|---|---|---|---|
| | | | Type | Lc(A) (nm) | |
| 1 | A | a | Poly acrylonitrile fibers | 1.7 | 3.5 |
| 2 | B | a | Poly acrylonitrile fibers | 1.7 | 3.5 |
| 3 | B | a | Poly acrylonitrile fibers | 1.7 | 3.5 |
| 4 | B | a | Poly acrylonitrile fibers | 1.7 | 3.5 |
| 5 | B | a | Poly acrylonitrile fibers | 1.7 | 3.5 |
| 6 | B | a | Poly acrylonitrile fibers | 1.7 | 3.5 |
| 7 | A | a | Poly acrylonitrile fibers | 1.7 | 3.5 |
| 8 | B | a | Poly acrylonitrile fibers | 1.7 | 3.5 |
| 9 | B | a | Poly acrylonitrile fibers | 1.7 | 3.5 |
| 10 | B | a | Poly acrylonitrile fibers | 1.7 | 3.5 |
| 11 | - | - | - | - | - |
| 12 | D | a | Poly acrylonitrile fibers | 1.7 | 3.5 |
| 13 | B | b | Poly acrylonitrile fibers | 1.7 | 0.9 |
| 14 | A | a | Poly acrylonitrile fibers | 1.7 | 3.5 |

[Table 3B]

| No. | (1) Weight per unit area of carbon fiber structure (g/m$^2$) | (2) Weight per unit area of carbon material (g/m$^2$) | (3) Weight per unit area of carbon particles (g/m$^2$) | Total weight per unit area (1)+(2)+(3) (g/m$^2$) | Content ratio of carbon material (2)/((1)+(2)+(3)) (%) | Content ratio of carbon material and carbon particle (2)+(3)/((1)+(2)+(3)) (%) | Mass ratio of carbon material to carbon particles (2)/(3) |
|---|---|---|---|---|---|---|---|
| 1 | 27 | 38 | 10 | 75 | 50.7 | 64 | 3.8 |
| 2 | 27 | 45 | 6 | 78 | 57.2 | 65 | 7.0 |
| 3 | 27 | 37 | 6 | 70 | 52.7 | 61 | 6.0 |
| 4 | 27 | 30 | 7 | 64 | 46.4 | 58 | 4.0 |
| 5 | 50 | 53 | 9 | 112 | 47.4 | 55 | 6.0 |
| 6 | 50 | 57 | 9 | 116 | 48.8 | 57 | 6.0 |
| 7 | 27 | 47 | 12 | 86 | 54.7 | 68 | 4.0 |
| 8 | 27 | 59 | 8 | 94 | 62.4 | 71 | 7.0 |
| 9 | 27 | 50 | 8 | 86 | 58.6 | 68 | 6.0 |
| 10 | 27 | 33 | 8 | 69 | 48.5 | 61 | 4.0 |
| 11 | 27 | 0 | 0 | 27 | 0.0 | 0 | - |
| 12 | 27 | 51 | 51 | 129 | 39.5 | 79 | 1.0 |
| 13 | 27 | 14 | 14 | 55 | 25.5 | 51 | 1.0 |
| 14 | 27 | 50 | 13 | 90 | 55.6 | 70 | 3.9 |

[Table 4]

| No. | Ratio (O/C) of number of oxygen atoms to number of carbon atoms (%) | Overall cell resistance ($\Omega \cdot cm^2$) | Reaction resistance ($\Omega \cdot cm^2$) | Water flow rate for water (mm/sec) | Specific surface area of electrode material | |
|---|---|---|---|---|---|---|
| | | | | | All pores ($m^2/g$) | Mesopore ($m^2/g$) |
| 1 | 5.1 | 0.64 | 0.35 | 1.4 | 99 | 85 |
| 2 | 4.8 | 0.64 | 0.36 | 1.1 | 90 | 70 |
| 3 | 5.1 | 0.61 | 0.33 | 1.3 | 171 | 108 |
| 4 | 5.3 | 0.60 | 0.32 | 1.3 | 257 | 162 |
| 5 | 5.1 | 0.55 | 0.29 | 1.2 | 226 | 167 |
| 6 | 5.1 | 0.62 | 0.36 | 1.1 | 58 | 44 |
| 7 | 4.1 | 0.74 | 0.48 | 1.2 | 22 | 11 |
| 8 | 3.9 | 0.76 | 0.45 | 0.9 | 20 | 9 |
| 9 | 4.2 | 0.65 | 0.38 | 1.1 | 38 | 14 |
| 10 | 4.3 | 0.63 | 0.38 | 1.2 | 65 | 24 |
| 11 | 3.8 | 0.91 | 0.61 | 1.1 | 2 | Evaluation was impossible |
| 12 | 3.1 | 0.79 | 0.56 | 1.2 | 5 | Evaluation was impossible |
| 13 | 2.9 | 0.73 | 0.43 | 1.1 | 265 | 144 |
| 14 | 0.4 | 0.85 | 0.55 | Water did not flow | 13 | 7 |

In Nos. 1 to 6, electrode materials that satisfy the requirements of the present invention and that each have a very large mesopore specific surface area and low resistance were obtained. It is considered that this is particularly because A to B in Table 1 having small particle diameters were used as the carbon particles other than graphite, and the electrode material was produced under the predetermined conditions, so that the reaction surface area was increased, the carbon fibers were activated, and the surfaces of the carbon particles other than graphite particles were exposed by removing the carbon material, to improve electrode activity.

Specifically, Nos. 1 to 6 (examples of the present invention) and Nos. 7 to 14 (comparative examples) are examples in which manufacture was performed under the same conditions except that the first oxidation was not performed. In each of the examples of the present invention in which oxidation was performed twice, the mesopore specific surface area was increased by about 4 to 8 times as compared with the comparative examples in which oxidation was performed only once, and the overall cell resistance (overall cell resistance at SOC of 50%) was also further reduced.

Among the comparative examples Nos. 7 to 14, the overall cell resistance of No. 10 is as low as that of the examples of the present invention, and this is because the conductive resistance is low, not the reaction resistance. It is considered that, as described above, when the conductive resistance is low, the repulsive force of the material is high and the contact resistance between the fibers and the members is reduced, so that the battery efficiency is likely to be decreased.

In addition, No. 5 is an example in which spunlace was used as a base material (fiber structure) instead of the carbon paper in No. 3, and the mesopore specific surface area was further improved due to the use of the spunlace. It is inferred that this is because the activation effect of the carbon fibers themselves is greater in the spunlace than in the paper base material.

The overall cell resistance of No. 5 with a larger mesopore specific surface area was increased slightly as compared with that of No. 3. It is considered that this is because, when a cell is assembled and the overall cell resistance is measured, since two sheets are incorporated as a paper sample as in No. 3, and one sheet is incorporated as a spunlace sample as in No. 5, the electrode specific surface area in the cell at the time of measuring the overall cell resistance is smaller in No. 3 than in No. 5.

Meanwhile, No. 11 is an example in which carbon particles other than graphite particles and a carbon material were not used and carbon fibers were merely used, and the reaction surface area was insufficient, so that the resistance was significantly increased. The results of the meso specific surface areas in No. 1 and No. 12 described below were all "unmeasurable". This is because these BET specific surface areas are not larger than 5 $m^2/g$ and very small, so that the meso specific surface area is too small to be detected or does not exist.

In No. 12, since D in Table 1 having a large particle diameter and also having large Lc(B) was used as the carbon particles, the overall cell resistance was increased. It is considered that this is because, when carbon particles having a large particle diameter are used, the reaction surface area is less than that in the examples of the present invention, and when carbon particles having high carbon crystallinity are used, it is difficult to add oxygen functional groups, so that the affinity for an aqueous electrolyte was decreased near the carbon particles, and the reaction activity was not improved.

No. 13 is an example in which the ratio Lc(C)/Lc(A) was small, and the resistance was increased. It is considered that this is because the carbon crystallinity of the carbon material was lower than that in the examples of the present invention, so that the resistance to electron conductivity between the carbon particles and the carbon fibers was increased, and the reaction activity of the carbon particles was not efficiently utilized.

No. 14 is an example in which the ratio O/C was small, and the resistance was increased and water did not flow. It is considered that this is because the amount of oxygen functional groups was small, so that the affinity for an electrolyte was decreased as compared with the examples of the present invention, and the reaction activity was decreased.

INDUSTRIAL APPLICABILITY

According to the present invention, a carbon electrode material that is capable of decreasing cell resistance during initial charging and discharging and has excellent battery energy efficiency can be provided. Therefore, the carbon electrode material is useful as a carbon electrode material used for a negative electrode of a manganese/titanium-based redox flow battery. The carbon electrode material of the present invention is preferably used for flow-type and non-flow type redox flow batteries, a redox flow battery composited with lithium, a capacitor, and a fuel-cell system, etc.

DESCRIPTION OF THE REFERENCE CHARACTERS

| | |
|---|---|
| 1 | current collecting plate |
| 2 | spacer |
| 3 | ion-exchange membrane |
| 4a, 4b | liquid flow path |
| 5 | electrode material |
| 6 | positive electrode electrolyte tank |
| 7 | negative electrode electrolyte tank |
| 8, 9 | pump |
| 10 | liquid inflow port |
| 11 | liquid outflow port |
| 12, 13 | external flow path |

**Claims**

1. A carbon electrode material for a negative electrode of a manganese/titanium-based redox flow battery, the carbon electrode material comprising;

   carbon fibers (A), carbon particles (B) other than graphite particles, and a carbon material (C) for binding the carbon fibers (A) and the carbon particles (B) other than graphite particles, and
   the carbon electrode material for the manganese/titanium-based redox flow battery satisfies the following requirements:

   (1) a particle diameter of the carbon particles (B) other than graphite particles is not larger than 1 $\mu$m;
   (2) Lc(B) is not larger than 10 nm when Lc(B) represents a crystallite size, in a c-axis direction, obtained by X-ray diffraction in the carbon particles (B) other than graphite particles;

(3) Lc(C)/Lc(A) is 1.0 to 5 when Lc(A) and Lc(C) represent crystallite sizes, in a c-axis direction, obtained by X-ray diffraction in the carbon fibers (A) and the carbon material (C), respectively;

(4) A mesopore specific surface area obtained from a nitrogen adsorption amount is not less than 30 m$^2$/g; and

(5) A number of oxygen atoms bound to the surface of the carbon electrode material is not less than 1% of the total number of carbon atoms on the surface of the carbon electrode material.

2. The carbon electrode material according to claim 1, wherein mass ratio of the carbon material (C) to the carbon particles (B) other than graphite particles is not less than 0.2 and not larger than 10.

3. The carbon electrode material according to claim 1 or 2, wherein a BET specific surface area of the electrode material obtained from a nitrogen adsorption amount is not less than 40 m$^2$/g.

4. The carbon electrode material according to any one of claims 1 to 3, wherein a water flow rate of the electrode material is not less than 0.5 mm/sec.

5. A manganese/titanium-based redox flow battery comprising the carbon electrode material according to any one of claims 1 to 4 on a negative electrode.

6. A method for producing the carbon electrode material according to any one of claims 1 to 4, comprising following steps in this order;

a step of impregnating carbon fibers with carbon particles other than graphite particles and precursor of carbon material;

a carbonizing step of heating the product obtained by the impregnation at a heating temperature of 500°C or higher and lower than 2000°C under an inert atmosphere;

a primary oxidization step of oxidizing at temperature of not lower than 500°C and not higher than 900°C in a dry process;

a graphitization step of heating at a temperature of not lower than 1300°C and not higher than 2300°C under an inert atmosphere; and

a secondary oxidization step of oxidizing at temperature of not lower than 500°C and not higher than 900°C in a dry process;

[Fig. 1]

[Fig. 2]

[Fig. 3]

carbon fiber (A)

carbon particles (B) other than graphite particles, and a carbon material (C)

[Fig. 4]

carbon fiber (A)

## INTERNATIONAL SEARCH REPORT

International application No.

PCT/JP2020/009755

### A. CLASSIFICATION OF SUBJECT MATTER

Int.Cl. H01M4/88(2006.01)i, H01M4/96(2006.01)i, H01M8/02(2016.01)i, H01M8/18(2006.01)i
FI: H01M8/18, H01M4/96M, H01M8/02, H01M4/88C, H01M4/96B
According to International Patent Classification (IPC) or to both national classification and IPC

### B. FIELDS SEARCHED

Minimum documentation searched (classification system followed by classification symbols)
Int.Cl. H01M4/88, H01M4/96, H01M8/02, H01M8/18

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-33758 A (TOYOBO CO., LTD.) 09.02.2017 (2017-02-09), claims 1-2, paragraphs [0015], [0018], [0077] | 1-6 |
| A | JP 59-101776 A (TOYOBO CO., LTD.) 12.06.1984 (1984-06-12), claims, page 2, lower left column, line 5 to page 3, upper right column, line 17, page 4, upper left column, line 13 to upper right column, line 6, page 4, lower left column, line 6 to page 5, upper left column, line 19 | 1-6 |
| P, A | WO 2019/049756 A1 (TOYOBO CO., LTD.) 14.03.2019 (2019-03-14), claims 5, 11, paragraphs [0017], [0215]-[0218], [0240]-[0242], tables 2, 4 | 1-6 |
| P, A | WO 2019/049755 A1 (TOYOBO CO., LTD.) 14.03.2019 (2019-03-14), claims 5, 9, paragraphs [0015], [0215]-[0218], [0241]-[0244], tables 2, 4 | 1-6 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18.05.2020 | 26.05.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| INTERNATIONAL SEARCH REPORT | International application No. |
|---|---|
| Information on patent family members | PCT/JP2020/009755 |

```
JP 2017-33758 A     09.02.2017    (Family: none)

JP 59-101776 A      12.06.1984    (Family: none)

WO 2019/049756 A1  14.03.2019    TW 201918454 A

WO 2019/049755 A1  14.03.2019    (Family: none)
```

Form PCT/ISA/210 (patent family annex) (January 2015)

**EP 3 940 828 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012204135 A
- JP S63200467 A
- JP 2019045664 A